# EUROPEAN PATENT APPLICATION

(11) **EP 1 998 122 A1**
(43) Date of publication of application: **03.12.2008**
(21) Application number: 07010596.0
(22) Date of filing: 29.05.2007
(51) Int. Cl.: F24J 2/54, F24J 2/40, H01L 31/042

(54) **Two-axis solar tracker**

(71) Applicant: Orta Alava, Miguel Angel, 31500 Tudela Navarra (ES)
(72) Inventor: Orta Alava, Miguel Angel, 31500 Tudela Navarra (ES)
(74) Representative: Schäfer, Matthias W.

(57) **Abstract**

Two-axis solar tracker of the type used in the support of a photovoltaic module to track the movement of the sun both horizontally in its movement from east to west and vertically according to the hour angle, comprising a hollow tower (1) affixed to the ground, which supports a rotating head (3), accessible from above, which serves at the same time as a support for the photovoltaic module (4) by means of a horizontal axis of rotation (5) and a double actuator (6) to regulate its angle, this photovoltaic module being formed by rows of photovoltaic plates (23) distributed longitudinally, and separate from each other at the bottom.

## Description

The present invention relates, as its title indicates, to a two-axis solar tracker of the type used in the support of a photovoltaic module to track the movement of the sun both horizontally in its movement from east to west and vertically according to the hour angle, characterised in that it comprises a hollow tower affixed to the ground, which supports a rotating head, accessible from above, which serves at the same time as a support for the photovoltaic module by means of a horizontal axis of rotation and a double actuator to regulate its angle, this photovoltaic module being formed by rows of photovoltaic plates distributed longitudinally, and separate from each other at the bottom, helping to create an air current that ventilates the solar modules, preventing a drop in performance at high temperatures on hot days, as well as creating a wind-permeable structure, which in turn frees the solar tracker from stresses and strains.

There are many known multiple and varied types of configurations of photovoltaic modules and plates in devices generating electricity from solar energy, with demand increasing all the time. Many of these devices are based on a fixed structure that supports a photovoltaic module with both a fixed and preset angle. These types of fixed devices, which do not move, are very simple but involve the major drawback of their low energy performance, as they produce most electricity when the sun's rays are perpendicular to the plates that make up the solar module, producing much less at other times of the day. These types of devices involve the additional problem that they have an extremely high fixed resistance to the wind, which means the support must be reinforced considerably, thereby making them more expensive to construct. Furthermore, there is an additional drawback in that on the hottest days of the year the photovoltaic modules heat up, which, due to their semiconductive nature, reduces their ability to generate electricity even further.

Given the growing interest in these types of electricity-generating technologies, solutions have been sought for these problems. For example, Utility Model 200502676 *"Linear solar tracker for a photovoltaic* device" discloses a linear structure that permits the movement of the photovoltaic module by means of connecting rods, thereby slightly improving energy performance but without achieving optimal tracking of the sun's path.

There are also structures such as the one described in Utility Model 200502495 *"Solar tracker with support system by means of a rolling platform on a horizontal surface,"* which uses a standard rolling platform with adjustment of the angle of the sets of plates, but which presents the drawback of requiring a large amount of space in which to position the rolling structure, being very prone to obstructions and breakdowns, while also failing to solve the problems of wind loads and the overheating of the solar modules. Utility Model 200602025 *"Double axis solar tracker"* follows the same line and shares the same problems in protecting a structure with rolling tracks on the ground.

Another commonly known alternative solution involves two-axis trackers supported on a tower or column affixed to the ground. An example of this type of embodiment can be found in Utility Model 200601996 *"Dual axis solar tracker",* which presents a major drawback due to the fact that the mechanisms and motors that generate the movement are external to the fastening post, thereby causing problems relating to dirt and breakdowns and generating high maintenance costs. It does not provide any type of solution to wind loads, which means that it requires considerable structural supports in the base or in the support and rotation mechanisms in order to compensate for the force of the wind.

Another solution along the same lines is claimed in Utility Model 200602059 *"Solar tracker",* which describes a support tower with an external rotation mechanism on the horizontal axis, as a result of which it presents the same problems described above, and utilises on the vertical axis a hydraulic operating cylinder, which presents a drawback in that the device must be completed with the requisite hydraulic pressure elements, thereby making the device more complex and expensive and increasing the need for expensive maintenance thereafter. Furthermore, it fails to provide solutions to the problems presented by wind and the overheating of the modules.

An interesting improvement can be found in Patent ES 200301106 *"Solar tracker",* which briefly describes a tower with internal rolling means but without specifying or describing any type of mechanical solution for it. This embodiment incorporates an anemometer for performing the automatic folding of the platform in the event of wind, which is a safety measure that protects the tower structure but obviously limits its effectiveness, preventing it from operating on windy days.

Finally, we can find another type of solution in Patent ES 200402167 *"Solar tracker",* which describes a tower with solar plates separate from each other and separately tiltable with an ample open space between them to reduce wind loads, although the performance of the solar module is reduced as a large part of its surface is wasted on open spaces to allow the air to pass through. It also presents the added inconvenience of the complexity of the tilting mechanisms of each row of solar plates, which make the device more complex and expensive. In addition, the top part of the tower rotates in relation to the bottom one, something that generates a torque that creates a constant stress on the tower, which in turn creates problems and breakdowns in the rotor mechanisms.

In order to solve the existing problems affecting solar trackers, and to try and solve some of the problems and drawbacks described herein, improving the energy performance in the process, the inventive two-axis solar tracker has been designed, which consists of a hollow tower affixed to the ground, which supports on its top part a rotating head, accessible from above, which acts at the same time as a support for the photovoltaic module by means of a horizontal rotation of axis and a double actuator for adjusting its angle.

The hollow tower performs the main function of supporting the structure, but also houses in its interior all the electronic circuits controlling the tracking, the inverters for the panels, the motors and most of the mechanical movement transmission elements, all of them being protected from the weather. At the top of the hollow tower is horizontally disposed a turntable with the requisite actuator that causes the rotation in relation to the vertical axis.

In the top part of the hollow tower is located a rotating head, accessible from above by means of a hatchway, provided with a horizontal rotation of axis, and a double actuator to adjust the angle of the photovoltaic module.

On the horizontal rotation of axis of the rotating head is located the photovoltaic module, which is made up of a tubular supporting structure made up of cross members and cross rails to form a grill and which in conjunction support rows of photovoltaic plates distributed longitudinally. These rows of photovoltaic plates are disposed with a small angle, preferably of 5°, in relation to the supporting structure, creating a fixed separating groove that helps create an air current that ventilates the solar modules, preventing a drop in performance at high temperatures on hot days, as well as creating a wind-permeable structure, freeing the mechanical structure supporting the solar tracker from mechanical stresses and strains.

It is a characteristic of the invention that the distances between the horizontal and vertical axes of rotation of the apparatus, and between the elements supporting the momentum of stresses (turntables and actuators) have been reduced to the maximum in order to reduce the torques of the structure.

All the actuators and motors are electrical.

The two-axis solar tracker enables the photovoltaic module to track the movement of the sun both horizontally in its movement from east to west and vertically according to hour angle, maintaining in all cases its optimal position to allow maximum energy production.

The solar tracker performs two different rotations.
1 - Rotation on the vertical axis. This rotation allows the panel to be oriented from the moment the sun rises until it sets. The value of rotation of said axis (azimuthal) will preferably be 250°.
2 - Rotation on the horizontal axis. Its purpose is to allow the panel to rotate on the plane, exposing its surface more or less perpendicular to the sun according to the sun's position. The size of this rotation is preferably 70°, the structure remaining at 75° and 5° in relation to the horizontal, as the solar modules are fitted onto said structure with an angle of preferably 5°, with the purpose of creating openings for the filtering of air.

The electronic tracking control circuit makes the relevant astronomic calculations of the exact position of the sun based on the current time and date, depending on the geographical position of the tracker.

The main advantage of this invention is that it encourages an air current that ventilates the solar module, preventing a drop in performance at high temperatures, thereby creating a wind-permeable structure, which in turn frees the solar tracker from stresses and strains.

Another important advantage is that it is provides a set of photovoltaic solar panels, tracking the path of the sun so that said set is exposed to the direct radiation of the sun, thereby improving the production of the device, providing an increase of up to 30% in the final production of the photovoltaic solar device, thereby increasing its performance.

It is worth pointing out that the tracking control is carried out by an electronic control circuit in which the astronomic calculations of the exact position of the sun are based on the current time and date, depending on the geographical position of the tracker.

Another undeniable advantage is that the structure of the solar tracker greatly reduces the mechanical stresses that may be caused to it as a result of the wind, the weight of snow, gravitational momentum, etc thereby making maintenance work easier.

Another advantage of the invention is that all the movements are carried out by electrical rather than hydraulic actuators, thus preventing maintenance costs resulting from leaks and breakdowns.

Another of the most important advantages is that the reduction of mechanical momentum and stresses means that the surface of photovoltaic plates to be rotated and exposed perpendicularly to the solar radiation may be greater, greatly improving energy performance.

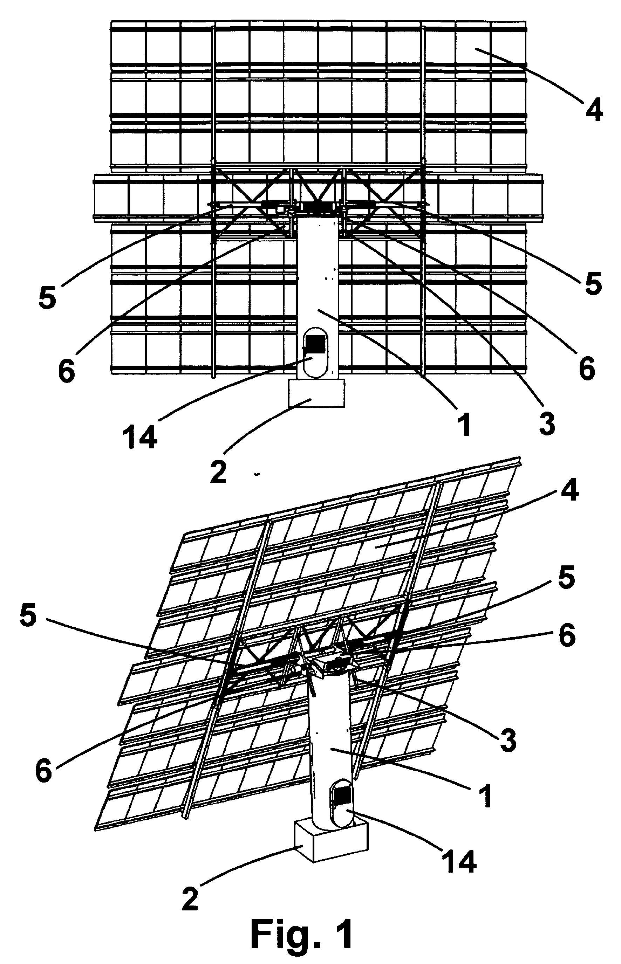

In order to better understand the object of the present invention, a preferential practical embodiment of the two-axis solar tracker has been represented in the plan attached. In said plan Figure 1 shows perspective and rear views of the entire solar tracker unit.

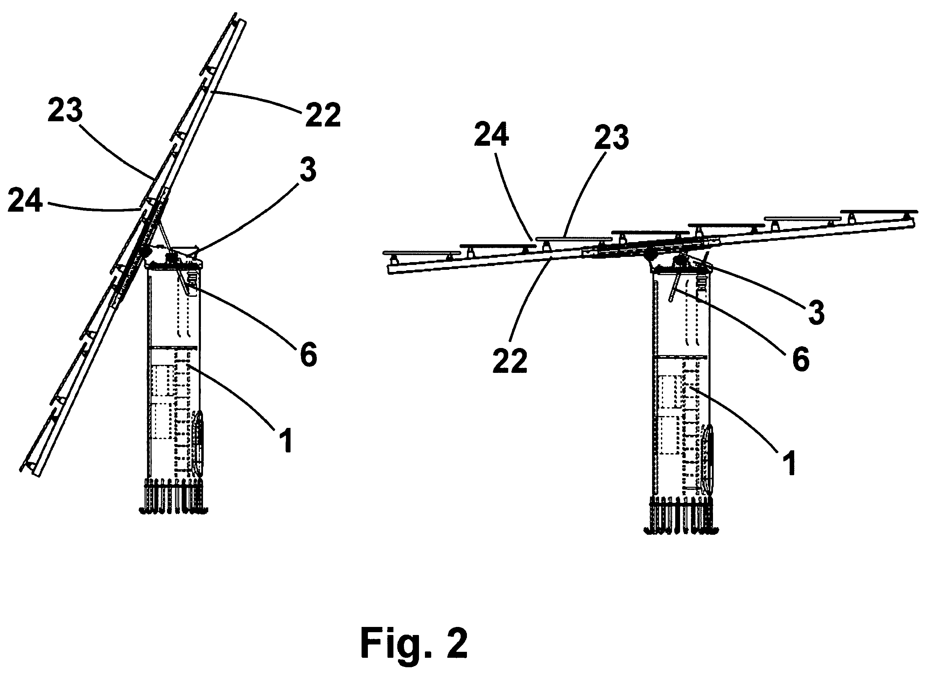

Figure 2 shows profile views of the entire solar tracker unit, in an unfolded position and in a rest and safety position.

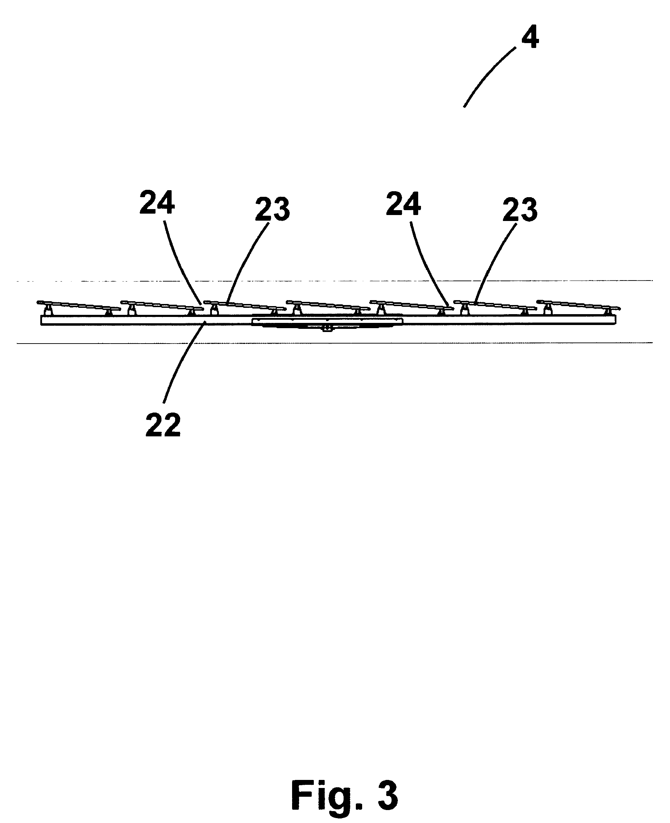

Figure 3 shows a view in profile of the photovoltaic module unit, showing the angle of assembly of the photovoltaic plates in relation to the support structure.

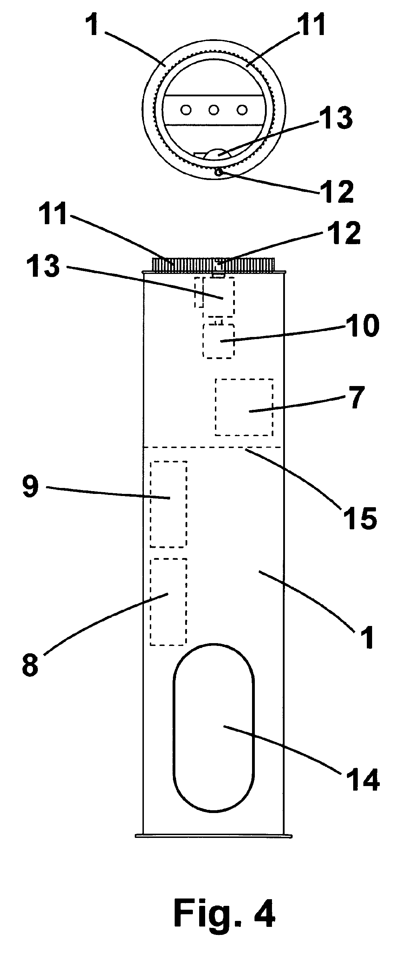

Figure 4 shows front and upper views of the support tower, detailing in transparencies the rotation mechanisms in the vertical axis and the internal electrical mechanisms.

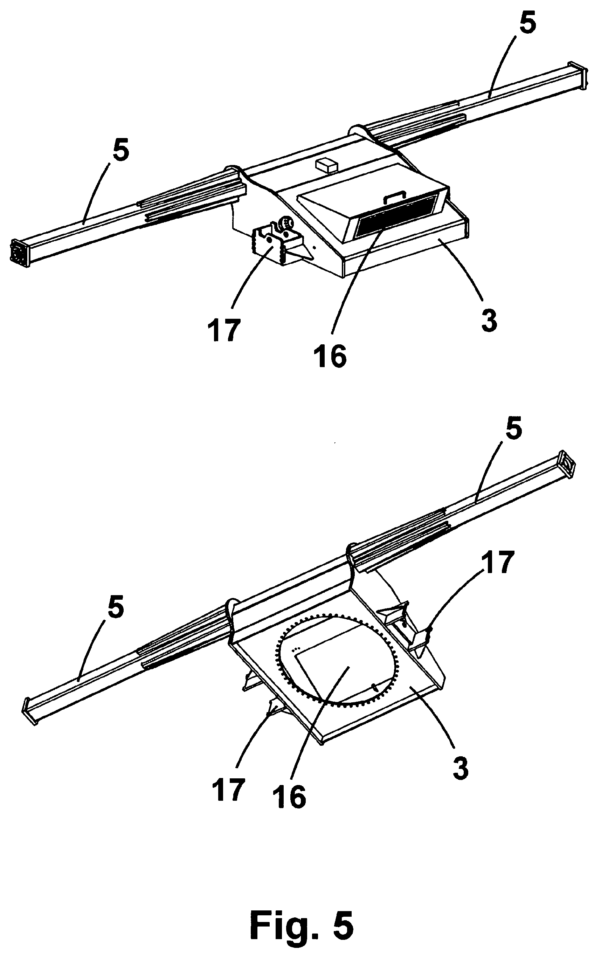

Figure 5 shows views in perspective, one top and the other bottom, of the rotating head.

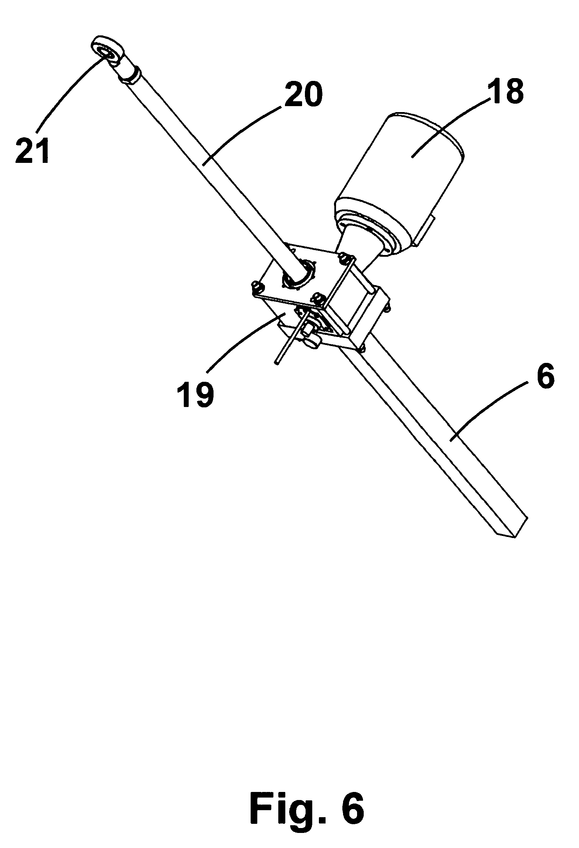

Figure 6 shows a view in perspective of one of the two actuators for the regulation of the rotation on the horizontal axis.

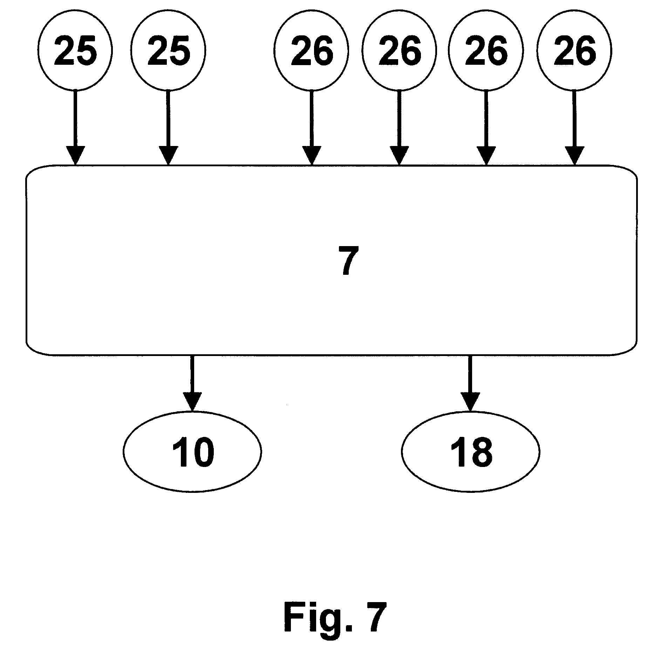

Figure 7 shows a simplified block diagram of the electronic control circuit.

The inventive two-axis solar tracker is basically made up of, as can be seen in the plan attached, a hollow tower (1) affixed to the ground by means of the suitable foundations or concrete footing (2), which supports on its top part a rotating head (3) accessible from the top part of the hollow tower (1), which serves at the same time as a support for the photovoltaic module (4) by means of a horizontal axis of rotation (5) and a double actuator (6) in order to adjust its angle.

The hollow tower (1) performs the main function of supporting the structure, but also houses in its interior all the electronic tracking control circuits (7), the electrical panel (8), the electrical inverters (9) for the panels, the motor (10) and most of the mechanical movement transmission elements on the vertical axis, all of them being protected from the weather. At the top of the hollow tower (1) is horizontally disposed a turntable (11), connected to the motor (10) by means of a pinion (12) and a gear reducer (13) and which causes the rotation in relation to the vertical axis.

The hollow tower (1) adopts the shape of a hollow tubular body provided with an intake (14) on the side opposite the photovoltaic module (4), for access to the interior of the tracker. The arrangement of one or more intermediate floors (15), connected by vertical internal stairways, for the housing and separation of the various necessary electrical (8,9) and control (7) elements, is provided for on the inside.

In the top part of the hollow tower (1), and connected mechanically to the turntable (11), is located the rotating head (3) accessible from above by means of a hatchway (16), provided with a horizontal rotation of axis (5), and a double actuator (6), both located on laterally disposed supports (17) to adjust the angle of the photovoltaic module (4). These actuators (6) are positioned on either side of the rotating head (3), and are preferably connected together by a drive bar. The motor (18) generating the movement on the horizontal axis is attached directly to the first actuator (6) by a clip coupling (19). The spindles (20) of the elevators are reinforced and ball-and-socket joints (21) are affixed to their ends to link together the structure (22) supporting the solar panels (23).

On the front of the rotating head (3) is located a ventilation grill that causes an air current inside the hollow tower (1) of the tracker, contributing to the refrigeration of the electrical (8, 9) and electronic control (7) equipment.

This arrangement of elements leads to a reduction in the loads on the orientation turntable (11). With this in mind, the distance between the point of rotation of the photovoltaic module (4) and the turntable (11) has been reduced as far as possible in order to reduce the momentum on it. Similarly, the smaller the space between the centre of gravity of the unit formed by the structure and the turntable, the more the momentum effected by the weight of the structure is reduced.

On the horizontal rotation of axis (5) of the rotating head (3) is located the photovoltaic module (4), which is made up of a tubular supporting structure (22) made up of cross members and cross rails to form a grill and which in conjunction support rows of solar panels (23) or photovoltaic plates, distributed longitudinally. These rows of solar panels (23) are disposed with a small angle, preferably of 5°, in relation to the supporting structure (22), creating a fixed separating groove (24), characteristic of the invention, that helps create an air current that ventilates the solar panels (23), preventing a drop in performance at high temperatures on hot days, as well as creating a wind-permeable structure, freeing the mechanical structure supporting the solar tracker from mechanical stresses and strains, all without reducing the effective surface exposed to the sun.

The photovoltaic module (4) is linked to the horizontal axis of rotation (5) of the rotating head (3) and is connected by another joint to the ball-and-socket joint (21) at the end of the rod of the elevators (6), for the purpose of causing its rotation in relation to the joint of the ball-and-socket joint (21).

It is a characteristic of the invention that the distances between the horizontal and vertical axes of rotation of the apparatus, and between the elements supporting the momentum of stresses (turntable (11) and actuators (6) have been reduced to the maximum in order to reduce the torques of the structure.

All the motors (10,18) used are electrical and incorporate axis protection by means of differentials.

The device is operated by means of an electronic control circuit (7) in which is created a solar position database and which is operated on for the positioning of the tracker, the requisite solar-position calculations being made in accordance with equations based on the date, time, UTM and latitude and longitude of the system, and the axes being positioned by means of the control of the motors (10,18). This electronic control circuit (7) compensates for the tilt angle of the mounted solar panels (23) in relation to the supporting structure (22).

The electronic control circuit (7) gives the movement commands of the solar tracker, depending on the actual position of the tracker and the position of the sun. To control these positions, inductive sensors (25) have been provided and which record the movement of the two axes, horizontal and vertical, and which in accordance with the rotation command add or subtract degrees on their respective axes of movement. In the event that these sensors give false readings that may damage the tracker, movement-limiting sensors (26) have also been provided and which alert the electronic control circuit (7) of the incorrect position, stopping it from moving.

The electronic control circuit (7) is designed to be programmable in accordance with the requirements of the location, namely the latitude, longitude, date, time, offset, movement intervals, rate of pulses, safety limits for wind gusts, starting angles and night time position.

The electrical panel (8) is disposed with an automatic-manual switch to restrict the movements of the solar tracker whenever a maintenance engineer is working on the solar tracker, operating under safety conditions. It also has an emergency button that prevents any type of movement of the solar tracker.

## Claims

1. Two-axis solar tracker of the type used in the support of a photovoltaic module to track the movement of the sun both horizontally in its movement from east to west and vertically according to the hour angle, **characterised in that** it comprises a hollow tower (1) affixed to the ground by means of the suitable foundations or concrete footing (2), which supports on its top part a rotating head (3) accessible from the top part of the hollow tower (1), which serves at the same time as a support for the photovoltaic module (4) by means of a horizontal axis of rotation (5) and a double actuator (6) in order to adjust its angle.

2. Two-axis solar tracker according to the preceding claim, wherein the hollow tower (1) supports the rest of the elements of the structure, also housing in its interior all the electronic tracking control circuits (7), the electrical panel (8), the electrical inverters (9) for the panels, the motor (10) and most of the mechanical movement transmission elements on the vertical axis.

3. Two-axis solar tracker according to the preceding claims, wherein the in the top of the hollow tower (1) is horizontally disposed a turntable (11), connected to the motor (10) by means of a pinion (12) and a gear reducer (13) and which causes the rotation in relation to the vertical axis.

4. Two-axis solar tracker according to any of the preceding claims, wherein the hollow tower (1) adopts the form of a hollow tubular body provided with an intake (14) on the side opposite the photovoltaic module (4), for access to the interior of the tracker, the arrangement of one or more intermediate floors (15), connected by vertical internal stairways, for the housing and separation of the various necessary electrical (8,9) and control (7) elements, being provided for on the inside.

5. Two-axis solar tracker according to any of the preceding claims, wherein in the top part of the hollow tower (1), and connected mechanically to the turntable (11), is located the rotating head (3) accessible from above by means of a hatchway (16), provided with a horizontal rotation of axis (5), and a double actuator (6), both located on laterally disposed supports (17) to adjust the angle of the photovoltaic module (4).

6. Two-axis solar tracker according to any of the preceding claims, wherein the actuators (6) are positioned on either side of the rotating head (3), and comprise a motor (18) generating the movement on the horizontal axis, which is attached directly to the first actuator (6) by a clip coupling (19) and spindles (20) on whose ends are affixed ball-and-socket joints (21) to link together the structure (22) supporting the solar panels (23).

7. Two-axis solar tracker according to any of the preceding claims, wherein on the front of the rotating head (3) is located a ventilation grill that causes an air current inside the hollow tower (1) of the tracker, contributing to the refrigeration of the electrical (8, 9) and electronic control (7) equipment.

8. Two-axis solar tracker according to any of the preceding claims, wherein on the horizontal rotation of axis (5) of the rotating head (3) is located the photovoltaic module (4), which is made up of a tubular supporting structure (22) made up of cross members and cross rails to form a grill and which in conjunction support rows of solar panels (23) or photovoltaic plates, distributed longitudinally.

9. Two-axis solar tracker according to any of the preceding claims, wherein the rows of solar panels (23) that make up the photovoltaic module (4) are disposed at an angle ranging between 2° and 10° in relation to the supporting structure (22), creating a fixed separating groove (24) that helps create an air current that ventilates the solar panels (23), and generates a wind-permeable structure.

10. Two-axis solar tracker according to any of the preceding claims, wherein the rows of solar panels (23) that make up the photovoltaic module (4) are disposed at an angle of 5° in relation to the supporting structure (22), creating a fixed separating groove (24) that helps create an air current that ventilates the solar panels (23), and generates a wind-permeable structure.

11. Two-axis solar tracker according to any of the preceding claims, wherein the photovoltaic module (4) is linked to the horizontal axis of rotation (5) of the rotating head (3) and is connected by another joint to the ball-and-socket joint (21) at the end of the rod of the elevators (6), for the purpose of causing its rotation in relation to the joint of the ball-and-socket joint (21).

12. Two-axis solar tracker according to any of the preceding claims, wherein the motors (10,18) used are electrical and incorporate axis protection by means of differentials.

13. Two-axis solar tracker according to any of the preceding claims, wherein the device is operated by means of an electronic control circuit (7) in which is created a solar position database and which is operated on for the positioning of the tracker, the requisite solar-position calculations being made in accordance with equations based on the date, time, UTM and latitude and longitude of the system, and the axes being positioned by means of the control of the motors (10,18).

14. Two-axis solar tracker according to any of the preceding claims, wherein the electronic control circuit (7) compensates for the tilt angle of the mounted solar panels (23) in relation to the supporting structure (22).

15. Two-axis solar tracker according to any of the preceding claims, wherein inductive sensors (25) have been provided and which record the movement of the two axes, horizontal and vertical, and which in accordance with the rotation command add or subtract degrees on their respective axes of movement, and movement-limiting sensors (26), which alert the electronic control circuit (7) of the incorrect position, stopping it from moving in the event that these sensors give false readings that may damage the tracker, all these sensors (25,26) being connected to the electronic control circuit (7).

16. Two-axis solar tracker according to any of the preceding claims, wherein the electronic control circuit (7) is designed to be programmable in accordance with the requirements of the location, namely the latitude, longitude, date, time, offset, movement intervals, rate of pulses, safety limits for wind gusts, starting angles and night time position.

17. Two-axis solar tracker according to any of the preceding claims, wherein the electrical panel (8) is provided with an automatic-manual switch and an emergency button.
